# EUROPÄISCHE PATENTSCHRIFT

(11) **EP 3 251 984 B1**
(45) Veröffentlichungstag und Bekanntmachung des Hinweises auf die Patenterteilung: **31.10.2018**
(21) Anmeldenummer: 16172303.6
(22) Anmeldetag: 31.05.2016
(51) Int. Cl.: B65G 27/16, B65G 27/08, B25B 11/00

(54) **VERBINDUNGSEINRICHTUNG**
CONNECTION DEVICE
DISPOSITIF DE RACCORDEMENT

(43) Veröffentlichungstag der Anmeldung: 06.12.2017
(73) Patentinhaber: Multipond Wägetechnik GmbH, 84479 Waldkraiburg (DE)
(72) Erfinder: PETERS, Andreas, 84544 Aschau am Inn (DE)
(74) Vertreter: Prüfer & Partner mbB Patentanwälte · Rechtsanwälte

(56) Entgegenhaltungen:
- US-A1- 2014 299 621
- US-B1- 8 251 204
- 99chemicals: "How to Remove a Neodymium Hard Drive Magenet From Its Bracket", , 5 November 2011 (2011-11-05), XP055383491, internet Retrieved from the Internet: URL:https://www.youtube.com/watch?v=GQhSy- Kz5DM [retrieved on 2017-06-21]
- 99Chemicals: "How to Remove a Neodymium Hard Drive Magenet From Its Bracket", , 5 November 2011 (2011-11-05), page 1, XP054977455, Retrieved from the Internet: URL:https://www.youtube.com/watch?v=GQhSy- Kz5DM [retrieved on 2017-06-20]

## Beschreibung

Die vorliegende Erfindung bezieht sich auf eine Verbindungseinrichtung, insbesondere zur Verwendung zur Verbindung einer Zuführeinrichtung für eine Waage und einer Antriebseinrichtung, um die Bewegungen der Antriebseinrichtung auf die Zuführeinrichtung zu übertragen.

Besonders bei Waagen bzw. Kombinationswaagen werden zu wiegende Produkte von einer Verteilvorrichtung verteilt und über Zuführeinrichtungen, welche beispielsweise in der Form einer Vibrationsrinne ausgeführt sein können, welche beispielsweise durch elektromagnetische Antriebseinrichtungen in Schwingung versetzt wird, den einzelnen Wägebehältern zugeführt. Bei einer solchen Verwendung ist es insbesondere erforderlich, dass die Zuführeinrichtungen zu Reinigungszwecken leicht ausbaubar und wieder einbaubar sind.

Gleichzeitig müssen Zuführeinrichtungen durch eine stabile Verbindungseinrichtung mit einer Antriebseinrichtung verbunden werden können. Dabei muss die Verbindungseinrichtung die Vibrationen, Schwingungen oder andere Bewegungen, welche von der Antriebseinrichtung erzeugt werden, auf die Zuführeinrichtung übertragen. Gleichzeitig ist es insbesondere für die Verwendung in der Lebensmittelindustrie oder lebensmittelverarbeitenden Industrie wichtig, dass eine solche Zuführeinrichtung bzw. die dazugehörige Verbindungseinrichtung hygienegerecht gestaltet wird, so dass ein Eintrag bzw. eine Anhaftung von Verunreinigungen, z. B. Lebensmittel aus einem früheren Verarbeitungsschritt, vermieden werden und eine leichte und gründliche Reinigbarkeit möglich ist.

US 2014/0299621 A1 offenbart eine Füllvorrichtung für einen Verteilerapparat für Medikamente, bei welcher ein Trichter durch mehrere Magnete an einem Vibrator befestigt ist.

US 8,251,204 B1 offenbart eine elektromagnetischen Halteeinheit für Vibrationszuführkomponenten, wobei ein Elektromagnet zum Halten der Verbindung eingeschaltet ist, zum Lösen der Verbindung jedoch ausgeschaltet werden kann.

Im Stand der Technik ist ferner aus EP 0 852 707 B1 eine Verbindungseinrichtung für eine Kombinationswaage bekannt, bei der die Bewegungen eines Vibrationsmotors durch eine spielfreie Verbindung auf eine Vibrationsrinne übertragen werden. Die besagte Verbindungseinrichtung weist ein zylindrisches Zwischenstück auf, dessen eines Ende mit der Antriebseinrichtung verbunden ist. Das andere Ende des zylindrischen Zwischenstücks ist über Schrauben mit einem Unterteil verbunden, wobei das Unterteil wiederum mit einer Unterseite der Vibrationsrinne in Verbindung gebracht werden kann. Durch Vorsehen mehrerer Führungsbolzen, Bohrungen, Absätzen und Ansätzen ist die Winkelposition der Vibrationsrinne relativ zur Verteilvorrichtung und Wägebehälter wählbar, so dass die Zuführung der Produkte optimal erfolgt. Ferner ist ein durch einen Spannhebel einstellbares Spannelement vorgesehen, durch welches die Anpresskraft des Verbindungselements an die Unterseite der Verteilvorrichtung eingestellt werden kann.

Eine solche Ausgestaltung bringt jedoch deutliche Nachteile mit sich, insbesondere für Anlagen der Lebensmittelindustrie oder lebensmittelverarbeitenden Industrie. Einerseits beinhaltet die Verbindung mehrere bewegte mechanische Komponenten. Bei Vibrationen, welche bei einem Vibrationsmotor als Antriebseinrichtung auftreten, ist die Dynamik eines solchen mechanischen Systems schwierig vorhersehbar. Ferner ist die Verbindungseinheit gemäß dem genannten Stand der Technik nicht hygienegerecht ausgestaltet, da sie gerade durch Bohrungen und Bolzen viele Kanten, Hohlräume und Verengungen aufweist, in denen sich leicht Lebensmittelreste oder Schmutz ablagern könnten, welche durch einfache Reinigung nicht beseitigt werden können und durch Migration über Luft oder Direktkontakt frische Lebensmittel verunreinigen können. Dies kann dazu führen, dass die Lebensmittel nicht mehr haltbar sind und sogar kontaminiert oder vergiftet werden können. Eine Verunreinigung durch Lebensmittelreste kann ferner zu einer Störung bzw. Beeinflussung der Dynamik der Verbindungseinrichtung führen. Ferner ist der Spannhebel zum Lösen dieser Verbindung nur sehr schwer zugänglich. Aufgrund des komplexen mechanischen Systems mit Bolzen, Bohrungen, Absätzen und Ansätzen ist die Baugruppe ferner nicht abdichtbar. Weiterhin muss der bereits genannte Spannhebel bei der Montage genau justiert werden, um eine optimale Einstellung der Zuführeinrichtung zu gewährleisten. Ferner kann an einem angebrachten Spannhebel und an Bauteilen, welche mit diesem verbunden sind (z.B. Lager) Verschleiß auftreten, was zu abnehmenden Kräften bis zum kompletten Verlust der formschlüssigen Verbindung führt.

Ein solches Bauteil weist somit deutliche Nachteile auf, insbesondere für die Verwendung in der Lebensmittelindustrie oder lebensmittelverarbeitenden Industrie.

Es ist daher Aufgabe der vorliegenden Erfindung, eine Verbindungseinrichtung zur Verfügung zu stellen, welche die oben genannten Probleme löst und insbesondere für eine hygienegerechte Gestaltung sorgt. Ferner ist es Aufgabe der vorliegenden Erfindung, eine Verbindungseinrichtung mit einfacher Bedienbarkeit zur Verfügung zu stellen, mit welcher die Verbindung spielfrei ist. Weiterhin ist es Aufgabe der vorliegenden Erfindung, eine Verbindungseinrichtung zur Verfügung zu stellen, bei der etwaiger Verschleiß an den Führungsflächen nicht zu einer Verschlechterung der Verbindung führt.

Diese Aufgabe wird durch eine Verbindungseinrichtung mit den Merkmalen gemäß Anspruch 1 oder 2 sowie durch ein Verfahren zum Herstellen und Lösen einer Verbindung einer Verbindungseinrichtung gemäß Anspruch 12 gelöst. Weitere vorteilhafte Ausgestaltungen der Erfindung sind Gegenstand der abhängigen Ansprüche.

Die vorliegende Erfindung beinhaltet eine Verbindungseinrichtung, welche sich im Wesentlichen aus einem Verbindungselement und einer Aufnahmeeinrichtung zusammensetzt, wobei die Aufnahmeeinrichtung mit der Zuführeinrichtung verbunden ist. Die Zuführeinrichtung weist eine Oberseite zum Zuführen von Produkten und eine gegenüberliegenden Unterseite auf. Das Verbindungselement ist mit einer Antriebseinrichtung verbindbar. Ferner ist die Aufnahmeeinrichtung so ausgestaltet, dass sie den oberen Teil des Verbindungselementes aufnehmen kann. Das Verbindungselement beinhaltet an dessen Oberseite mindestens einen ersten Magnet, in Ausführungsformen auch einen zweiten Magnet. Die Aufnahmeeinrichtung beinhaltet im Wesentlichen eine Basis, welche wiederum mindestens einen ersten Eisenkern, in Ausführungsformen einen zweiten Eisenkern, beinhaltet. An der Basis schließt sich mindestens ein Vorsprung an, mit welchem im verbundenen Zustand das Verbindungselement in Eingriff gebracht werden kann, so dass eine formschlüssige Verbindung erreicht werden kann. Im verbundenen Zustand liegen sich Magnet(e) und Eisenkern(e) gegenüber. Das Verbindungselement und die Aufnahmeeinrichtung sind vorzugsweise aus Edelstahl mit nicht ferromagnetischen Eigenschaften, vorzugsweise aus austenitischem Stahl hergestellt. Magnete sind vorzugsweise Dauermagnete, weiter vorzugsweise Neodym-Dauermagnete.

Durch die Verwendung von Magnetverbindungen und eine geeignete Geometrie des Verbindungselements und der Aufnahmeeinrichtung ist eine einfache Montage sowie eine Selbstzentrierung der beiden Bauteile möglich. Außerdem kann die Anzahl an Ecken, Kanten, Vertiefungen und Hohlräumen minimiert werden, so dass so eine hygienegerechte Gestaltung möglich ist.

Im Folgenden wird ein bevorzugtes Ausführungsbeispiel unter Bezugnahme auf die beigefügten Zeichnungen näher erläutert.
Fig. 1 zeigt eine Zuführeinrichtung einer ersten Ausführungsform, welche eine Aufnahmeeinrichtung und ein Verbindungselement beinhaltet.
Fig. 2 zeigt die Zuführeinrichtung aus Fig. 1, wobei die einzelnen Kräfte, welche sowohl an den Magneten als auch der Zuführeinrichtung wirken, gezeigt sind.
Fig. 3 zeigt die Zuführeinrichtung der ersten Ausführungsform in einer Situation, bei welcher sich die Aufnahmeeinrichtung in Demontage vom Verbindungselement befindet. Auch hier sind die Kräfte während der Demontage dargestellt.
Fig. 4 zeigt eine Zuführeinrichtung einer zweiten Ausführungsform, welche eine Aufnahmeeinrichtung beinhaltet, wobei ein Verbindungselement mit einem Vorsprung der Aufnahmeeinrichtung in Eingriff gebracht ist.

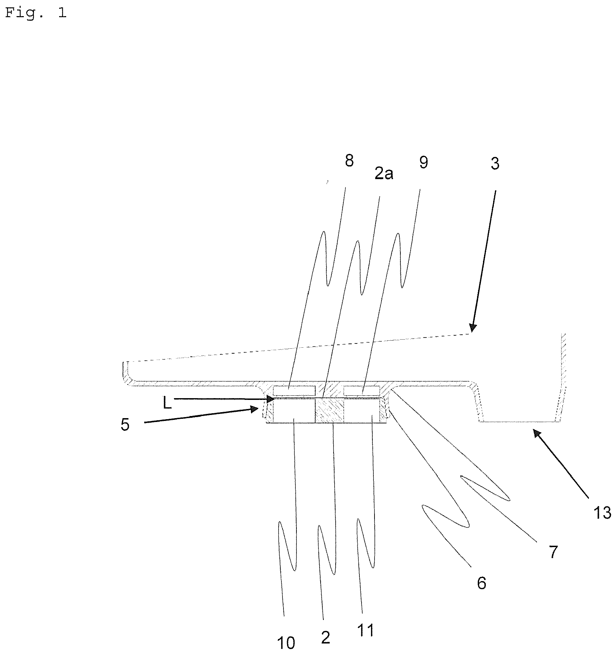

Fig. 1 zeigt eine Verbindungseinrichtung 1 gemäß einer ersten Ausführungsform im Querschnitt. Mit dem Bezugszeichen 3 ist eine Zuführeinrichtung bezeichnet, in der vorliegenden Ausführungsform eine Vibrationsrinne, auf der Produkte abgelegt werden und in Richtung einer Trichteröffnung 13 auf der rechten Seite in der Figur befördert werden, um von dort abgeworfen zu werden. Die Verbindungseinrichtung 1 ist an der Unterseite der Zuführeinrichtung 3, in etwa in der Mitte in Längserstreckung, vorgesehen. Die Verbindungseinrichtung 1 weist im Wesentlichen eine Aufnahmeeinrichtung 5 und ein Verbindungselement 2 auf.

In der vorliegenden Ausführungsform ist die Aufnahmeeinrichtung 5 integral mit der Zuführeinrichtung 3 ausgebildet. Alternativ kann die Verbindung der Zuführeinrichtung 3 und der Aufnahmeeinrichtung 5 durch Schweißen, Kleben, etc. erfolgen. Die Aufnahmeeinrichtung 5 beinhaltet eine Basis 7, welche so ausgebildet ist, dass sie zwei Eisenkerne, einen ersten Eisenkern 8 und einen zweiten Eisenkern 9 aufnimmt. Diese beiden Eisenkerne 8, 9 sind somit im Inneren der Basis 7 vorgesehen. In der vorliegenden Ausführungsform sind die beiden Magnete 8, 9 scheibenförmig ausgebildet und im Inneren der Basis 7 untergebracht. Die Aufnahmeeinrichtung 5 besitzt eine bündige glatte Fläche, ohne Fugen, Kanten, etc., in denen sich Verunreinigungen absetzen könnten. Am Außenumfang der Basis 7 schließt sich ein rippen- oder wandförmiger Vorsprung 6 an. Der Vorsprung 6 ist so geformt, dass er auf der dem Inneren der Basis 7 zugewandten Seite einen spitzen Winkel mit der Senkrechten der Oberfläche der Zuführeinrichtung 3 einschließt. Dadurch wird eine Aufnahmevertiefung ausgebildet, deren Querschnittsfläche sich vom äußersten Rand des Vorsprungs 6 in Richtung zur Basis 7 hin stetig verringert, so dass die Vertiefung eine sich nach innen verjüngende konische Form aufweist.

Das mit der der Aufnahmeeinrichtung 5 im Eingriff stehende Verbindungselement 2 ist (hier nicht gezeigt) mit einer Antriebseinrichtung, beispielsweise einem Vibrationsmotor, verbunden. Es weist eine derart gestaltete Form auf, dass es in die Aufnahmeeinrichtung 5 hineinpasst und von dieser aufgenommen werden kann. Im oberen Bereich hat es eine konische bzw. kegelstumpfförmige Form, die im Wesentlichen einen gleichen Winkel wie die konische Aufnahmeeinrichtung 5 aufweist. In das Verbindungselement 2 sind ein erster Magnet 10 und ein zweiter Magnet 11 integriert. Diese sind gleich wie die Eisenkerne 8, 9 in der Aufnahmeeinrichtung 5 jeweils innerhalb des Verbindungselements 2 vorgesehen, also beispielsweise in entsprechenden Vertiefungen eingelassen, eingeklebt oder sogar eingegossen. Die Vertiefungen können mit einem Deckel verschlossen sein, der mit der Oberfläche des Verbindungselements 2 verschweißt ist. Dadurch werden auch hier Vertiefungen, Kerben, Spalte o.ä. vermieden, an der sich Verunreinigungen absetzen könnten.

Die Abmessungen der Aufnahmeeinrichtung 5 und des Verbindungselements 2 sind so bestimmt, dass im zusammengefügten Zustand ein kleiner Luftspalt L zwischen den sich gegenüberliegenden Flächen ergibt, und dass beide konischen Außen- bzw. Innenwände in Anlage miteinander sind. Darüber hinaus wird dadurch folgender Vorteil erzielt: Selbst wenn einmal eine Verunreinigung an einer der beiden Oberflächen vorhanden sein sollte, können immer eine perfekter Positionierung und dichte Anlage gewährleistet werden, da diese Verunreinigung im vorgesehenen Spalt Platz finden. Bei unzureichender Reinigung ist die Funktion daher trotz nicht vollständig entfernter Verunreinigungen trotzdem gegeben. Durch die einfache Verbindung der Aufnahmeeinrichtung 5 und des Verbindungselements 2 kann die Zuführeinrichtung 3 leicht demontiert und einer Reinigung unterzogen werden, wodurch stets saubere Bauteile zum Einsatz kommen.

Die Verbindungseinrichtung 1 ist in Fig. 1 in montiertem Zustand gezeigt, d.h. das Verbindungselement 2 steht mit dem Vorsprung 6 der Aufnahmeeinrichtung 5 im Eingriff. Dabei liegen der erste Magnet 10 des Verbindungselements 2 dem ersten Eisenkern 8 der Aufnahmeeinrichtung 5 gegenüber, und der zweite Magnet 11 des Verbindungselements 2 liegt dem zweiten Eisenkern 9 der Aufnahmeeinrichtung 5 gegenüber. Ferner wird durch die Anordnung des Vorsprungs 6 im spitzen Winkel zur Senkrechten der Oberfläche der Zuführeinrichtung 3 und die zylinderstumpfähnliche bzw. konische Form des Verbindungselements 2 die Bildung eines Luftspalts L zwischen der oberen Seite 2a des Verbindungselements 2 sowie der Aufnahmeeinrichtung 5 ermöglicht. Durch diesen Luftspalt L entsteht Raum für eventuell vorkommende Ablagerungen, die auch in diesem Fall eine saubere, formschlüssige Verbindung nicht behindern würden.

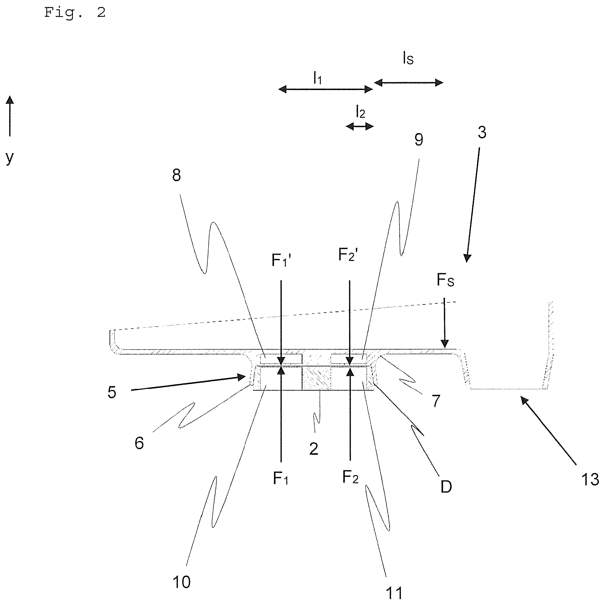

Fig. 2 entspricht im Wesentlichen Fig. 1. In Fig. 2 sind jedoch die Kräfte eingezeichnet, welche auf einzelne Punkte der Zuführeinrichtung 3 einwirken: Am Schwerpunkt der Zuführeinrichtung 3 greift die Gewichtskraft F_{S} in negativer y-Richtung an, während durch die beiden Eisenkerne 8 und 9 die beiden Auflagerkräfte F₁ und F₂ auf den ersten Magnet 10 und den zweiten Magnet 11 in positiver y-Richtung wirken.

Im Betrieb der Zuführeinrichtung 3 ist die Gewichtskraft F_{S} der Zuführeinrichtung 3 nicht konstant, da die Zuführeinrichtung 3 zusätzlich zu ihrem Eigengewicht mit der Gewichtskraft von Produkten, welche eine eigene Masse besitzen, beaufschlagt sein kann. Da sich diese Produkte zudem noch bewegen, verändert sich auch die Position des Schwerpunkts des Gesamtsystems aus Zuführeinrichtung 3 und den Produkten ständig. Daher hängen die resultierenden Auflagerkräfte F₁ und F₂ jeweils von der Gewichtskraft F_{S} und den Abständen der Kräfte F₁, F₂ und F_{S} zum Drehpunkt D ab.
Gegenkräfte zu den Auflagerkräften F₁ und F₂ sind die durch die Magnete hervorgerufene erste und zweite Haltekraft F₁' und F₂'. Hierbei sind die Magnetstärken des ersten Magnets 10 und des zweiten Magnets 11 so gewählt, dass sie jeweils eine größere Haltekraft F₁' bzw. F₂' erzeugen können als die jeweiligen Auflagerkräfte F₁ und F₂.

Wie in Fig. 2 ersichtlich, sind die Magnete 10, 11 so angeordnet, dass ein erstes Haltemoment M₁' aus der ersten Haltekraft F₁' und dem Hebelarm l₁ größer als ein zweites Haltemoment M₂' aus der zweiten Haltekraft F₂' und dem Hebelarm l₂ ist, was selbst bei theroetisch gleich groß angenommenen Haltekräften F₁' , F₂' bereits durch unterschiedliche Abstände (l₁, l₂) vom Drehpunkt D begründet werden kann.
Da die Magnetstärke des ersten Magnets 10 ferner größer als die Magnetstärke des zweiten Magnets 11 ausgewählt ist, verstärkt sich dadurch das erste Haltemoment M₁' gegenüber dem zweiten Haltemoment M₂' . Zu berücksichtigen ist hierbei, dass durch den Luftspalt L die Magnetkräfte abnehmen, und zwar quadratisch proportional zum Abstand zwischen Magneten 10, 11 und Eisenkernen 8,9, d.h. der Abstand muss klein gehalten werden.

Durch die Auswahl der Magnetstärken wird gewährleistet, dass wegen der durch die Magnete hervorgerufenen Haltekräfte F₁' und F₂', welche größer sind als die maximal möglichen Auflagerkräfte F₁ und F₂, eine Ablösung der Aufnahmeeinrichtung 5 vom Verbindungselement 2 sicher verhindert werden kann. Der längere Hebelarm l₁ der magnetischen Kraft des ersten Magneten 10 trägt wesentlich zur Erzeugung eines entsprechenden Haltemoments M₁ bei.

Da der Schwerpunkt des Verbindungselements 2 samt zugeführter Masse außerhalb der Aufnahmeeinrichtung 5 liegen kann, kann durch die Haltemomente M₁' and M₂' (in Fig 2. gegen den Uhrzeigersinn), welche durch die Magnetkräfte des ersten Magnets 10 (F₁') und des zweiten Magnets 11 (F₂') erzeugt werden, ein mögliches Kippmoment (in Fig. 2 im Uhrzeigersinn) vermieden werden.

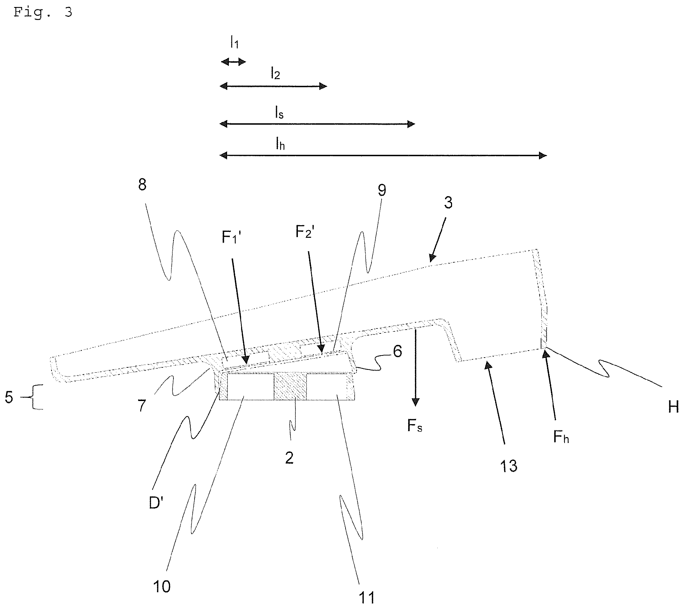

Fig. 3 zeigt eine Verbindungseinrichtung 1 während der Demontage, d. h. während die Zuführeinrichtung 3 vom Verbindungselement 2 gelöst wird. Im Vergleich zu Fig. 2 sind die von den Magneten ausgehenden Kräfte sowie die wirkenden Momente (F₁' und M₁' am ersten Magnet 10, F₂' und M₂' am zweiten Magnet 11) im Wesentlichen gleich, bevor die Zuführeinrichtung 3 beginnt, sich vom Verbindungselement 2 wegzubewegen. Der Schwerkraft F_{S} der Zuführeinrichtung 3 wirkt eine Lösekraft Fₕ entgegen, welche an einem Punkt H der Zuführeinrichtung 3, in Fig. 3 am rechten unteren Ende, aufgebracht wird. Der Drehpunkt zum Ablösen der Zuführeinrichtung 3 befindet sich nun auf der Position D'. Die Anwendung der Kraft Fₕ am rechten Ende an der Zuführeinrichtung erzeugt aufgrund ihres langen Hebelarms lₕ ein großes Lösemoment Mₕ um den Drehpunkt D'. Die dagegenhaltenden Haltemomente M₁ und M₂ der magnetischen Haltekräfte F₁' (ausgehend vom ersten Magnet 10) und F₂' (ausgehend vom zweiten Magnet 11) haben hingegen nur kleine Hebelarme l₁ und l₂. Hierbei hat die größere beider Kräfte F₁ den kleinsten Hebelarm l₁. Das Lösen der verbundenen Elemente geschieht auf diese Weise sehr leicht, da die größte Haltekraft F₁' (hervorgerufen durch die größte Magnetstärke) das kleinste Moment M₁ erzeugt. Nach Beginn des Ablösens verringern sich die von den Magneten 10, 11 ausgehenden Kräfte F₁' und F₂' wegen dem immer größer werdenden Abstand zwischen Magneten 10, 11 und Eisenkernen 8,9, was auch die Haltemomente M₁' und M₂' immer weiter verringert.

Im Folgenden soll noch das Verfahren zum Herstellen und Lösen der Verbindung des Verbindungselements 2 und der Aufnahmeeinrichtung 5 beschrieben werden.

Zum Herstellen der Verbindung wird das Verbindungselement 2 mit seiner oberen Seite 2a in die unmittelbare Nähe der Aufnahmeeinrichtung 5 gebracht, so dass sich der erste Eisenkern 8 der Aufnahmeeinrichtung 5 und der erste Magnet 10 des Verbindungselements 1, sowie der zweite Eisenkern 9 der Aufnahmeeinrichtung und der zweite Magnet 11 des Verbindungselements gegenüber liegen, so dass magnetische Anziehungskräfte entstehen und wirken können. Die entstehenden magnetischen Kräfte bewirken, dass sich das Verbindungselement 2 der Aufnahmeeinrichtung 5 annähert und sich selbst zentrierend innerhalb des Vorsprung 6 der Aufnahmeeinrichtung 5 in Eingriff gebracht wird. Der Abstand zwischen Aufnahmeeinrichtung 5 und Verbindungselement 2 verkleinert sich immer mehr, bis das Verbindungselement 2 seine finale Position in der Aufnahmeeinrichtung 5 erreicht hat. Bei dieser finalen Position ist zwischen der Aufnahmeeinrichtung 5 und dem Verbindungselement 2 nur noch der schmale Luftspalt L vorhanden.

Zum Lösen der Verbindung wird eine Druckkraft Fₕ auf einen Punkt (Punkt H in Fig. 3) der Zuführeinrichtung 3 aufgebracht, der vom ersten Eisenkern 8 einen größeren Abstand als vom zweiten Eisenkern 9 besitzt. Der Punkt H, an dem die Kraft zum Lösen Fₕ angelegt wird, ist in Fig. 3 vom Schwerpunkt der Zuführeinrichtung 3 verschieden. Durch die entstehenden Drehmomente wird als erstes die Haltekraft F₂' überwunden, dann beginnt sich der Abstand zwischen Verbindungselement 2 und Aufnahmeeinrichtung 5 in dem Bereich zu vergrößern, in denen der erste Eisenkern 9 und der zweite Magnet 11 vorgesehen sind. Erst bei weiterer Rotation um den Drehpunkt D' beginnt sich auch der Abstand zwischen Bereichen, in denen im Verbindungselement 2 der erste Magnet 10 sowie in der Aufnahmeeinrichtung 5 der erste Eisenkern 8 vorgesehen sind, zu vergrößern, wenn auch die Haltekraft F₁' überwunden ist. Die kegelstumpfförmige Form des Verbindungselements 2 sowie die Anordnung des Vorsprungs 6 in spitzem Winkel mit der Senkrechten der Oberfläche der Zuführeinrichtung 3 erlauben somit eine Rotation um den Drehpunkt D'.

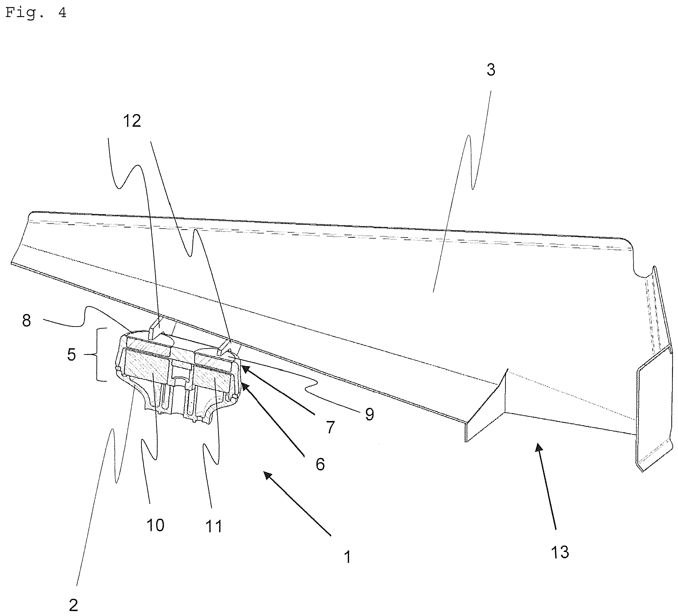

Fig. 4 zeigt eine zweite Ausführungsform der Erfindung. Im Gegensatz zur ersten Ausführungsform ist die Aufnahmeeinrichtung 5 nicht mit der Zuführeinrichtung 3 integral ausgebildet bzw. mit dieser verschweißt, sondern durch zwei Haltevorrichtungen 12 mit dieser verbunden. Somit ist die Aufnahmeeinrichtung 5 mit einem Abstand zur Zuführeinrichtung 3 vorgesehen.

Die Zuführeinrichtung 3 hat ferner keine rotationssymmetrische Form, sondern ist oval ausgebildet.

Ferner hat das Verbindungselement 2 innen hohle Abschnitte und ist nicht durchgehend massiv ausgebildet.

### Weitere Ausführungsformen

Die vorliegende Erfindung ist nicht auf die oben genannte Ausführungsform beschränkt.

Beispielsweise wären weitere Geometrien des Verbindungselements 2 möglich. Dieses muss nicht zwingend rotationssymmetrisch oder oval ausgebildet sein. Es wären hier auch vieleckige Formen möglich, z. B. quadratisch oder rechteckig, oder aber zusammengesetzte Formen.

Auch bei der Ausgestaltung des Vorsprungs 6 gibt es mehrere Möglichkeiten, wobei jedoch immer der Vorsprung 6 in Eingriff mit dem Verbindungselement 2 stehen muss und keine Presspassung vorhanden sein darf, so dass um den Drehpunkt D' gedreht werden kann.

Ferner ist es nicht nötig, den Vorsprung 6 durchgehend auszugestalten. Mehrere Teilvorsprünge mit Abständen zwischen diesen sind ebenfalls möglich.

Ferner wäre es ebenfalls möglich, den ersten Magnet 10 und/oder den zweiten Magnet 11 nicht als Dauermagnet, sondern als Elektromagnet auszuführen. In diesem Fall müssten durch das Verbindungselement 2 noch elektrische Leitungen zur Versorgung der beiden Magnete gelegt werden. Hierfür wäre entsprechend eine Bohrung vorzusehen.

Weiterhin ist es nicht unbedingt nötig, die Eisenkerne 8 und 9 innerhalb der Verbindungseinrichtung 2 zu montieren. Es wäre ebenfalls eine Variante denkbar, bei welcher umgekehrt die beiden Magnete 10, 11 auf der oberen Seite 2a des Verbindungselements 2 angebracht werden. Ebenso wäre es denkbar, die beiden Eisenkerne 8, 9 nicht innerhalb der Basis 7 der Aufnahmeeinrichtung 5 der Zuführeinrichtung 3 auszuführen, sondern bei welchem diesen auf der unteren Oberfläche der Basis 7 montiert würden.

Ferner wäre es auch denkbar, dass die Eisenkerne 8, 9 am Verbindungselement 2 montiert werden und die beiden Magnete 10, 11 an der Aufnahmeeinrichtung 5 montiert werden.

Weiterhin ist die Erfindung nicht auf genau zwei Magnete beschränkt. Es könnten auch mehr als zwei Magnete vorgesehen werden, wobei im letzteren Fall jeweils immer zu beachten ist, dass Einzelmagnete, welche einen größeren Abstand vom Schwerpunkt der Zuführeinrichtung 3 haben, eine größere Magnetstärke als jene Magnete aufweisen müssen, welche sich näher am Schwerpunkt der Zuführeinrichtung 3 befinden.

Denkbar ist auch eine Lösung mit nur einem Magnet und/oder einem Eisenkern. Hierbei muss mindestens einer aus Magnet und Eisenkern so geformt sein, dass die Magnetkraft mit zunehmenden Abstand vom Drehpunkt (D') kleiner wird. Dies kann beispielsweise durch eine entsprechende Form des Magneten oder Eisenkerns erreicht werden (beispielsweise kreissegmentförmig). Auch dadurch sind das Verbindungselement 2 und die Aufnahmeeinrichtung 5 so gestaltet, dass sie durch Kippen um den Drehpunkt (D') voneinander gelöst werden können.

Je nach Form des Verbindungselements 2 und des Vorsprungs 6 können statt den Drehpunkten D und D' auch entsprechende Drehachsen vorliegen.

## Patentansprüche

1. Verbindungseinrichtung (1) zum Verbinden einer Zuführeinrichtung (3) mit einer Antriebseinrichtung (4), wobei die Zuführeinrichtung (3) eine Oberseite zum Zuführen von Produkten und eine gegenüberliegende Unterseite (3b) besitzt, wobei die Verbindungseinrichtung (1) aufweist:
eine Aufnahmeeinrichtung (5) auf der Unterseite (3b) der Zuführeinrichtung (3), wobei die Aufnahmeeinrichtung (5) mindestens einen Eisenkern (8) und am Außenumfang einen Vorsprung (6) aufweist; und
ein Verbindungselement (2) mit einer Oberseite (2a), das mindestens einen Magneten (10) aufweist,
wobei das Verbindungselement (2) im Wesentlichen komplementär zur Aufnahmeeinrichtung (5) gestaltet ist und dazu angepasst ist, mit dem Vorsprung (6) der Aufnahmeeinrichtung (5) in Eingriff zu stehen, wobei Eisenkern (8) und Magnet (10) so angeordnet sind, dass sie einander gegenüberstehen und im Eingriffszustand eine Magnetkraft erzeugen, die die Aufnahmeeinrichtung (5) und das Verbindungselement (2) lösbar miteinander verbinden, und das Verbindungselement (2) und die Aufnahmeeinrichtung (5) so gestaltet sind, dass sie durch Kippen um den Drehpunkt (D') voneinander gelöst werden können,
wobei mindestens einer aus Magnet (10) und Eisenkern (8) so geformt ist, dass die Magnetkraft mit zunehmenden Abstand vom Drehpunkt (D') kleiner wird,
wobei das Verbindungselement (2) sowie die Aufnahmeeinrichtung (5) jeweils komplementäre konische Formen aufweisen, die bei der Montage ineinander passen und sich selbst zentrieren.

2. Verbindungseinrichtung (1) zum Verbinden einer Zuführeinrichtung (3) mit einer Antriebseinrichtung (4), wobei die Zuführeinrichtung (3) eine Oberseite zum Zuführen von Produkten und eine gegenüberliegende Unterseite (3b) besitzt, wobei die Verbindungseinrichtung (1) aufweist:
eine Aufnahmeeinrichtung (5) auf der Unterseite (3b) der Zuführeinrichtung, wobei die Aufnahmeeinrichtung (5) einen ersten Eisenkern (8), einen zweiten Eisenkern (9) und einen Vorsprung (6) aufweist; und
ein Verbindungselement (2), das an seiner Oberseite (2a) einen ersten Magneten (10) und einen zweiten Magneten (11) aufweist,
wobei das Verbindungselement (2) im Wesentlichen komplementär gestaltet ist und dazu angepasst ist, mit dem Vorsprung (6) der Aufnahmeeinrichtung (5) in Eingriff zu stehen, wobei die Eisenkerne (8, 9) und die Magnete (10, 11) so angeordnet sind, dass sie im montierten Zustand einander gegenüberstehen und die die Aufnahmeeinrichtung (5) und das
Verbindungselement (2) lösbar miteinander verbinden, **dadurch gekennzeichnet, dass** der erste Magnet (10) einen größeren Abstand vom Schwerpunkt der Zuführeinrichtung (3) besitzt als der zweite Magnet (11) und der erste Magnet (10) eine höhere Magnetstärke aufweist als der zweite Magnet (11), so dass der erste Magnet (10) eine höhere Haltekraft verursachen kann als der zweite Magnet (11),
wobei das Verbindungselement (2) sowie die Aufnahmeeinrichtung (5) jeweils komplementäre konische Formen aufweisen, die bei der Montage ineinander passen und sich selbst zentrieren.

3. Verbindungseinrichtung (1) gemäß Anspruch 1 oder 2, wobei der/die Eisenkern(e) im Verbindungselement (2) anstelle in der Aufnahmeeinrichtung (5) vorgesehen sind, und der/die Magnet(e) in der Aufnahmeeinrichtung (5) anstelle in dem Verbindungselement (2) vorgesehen ist/sind.

4. Verbindungseinrichtung (1) gemäß einem der Ansprüche 1 bis 3, wobei die Aufnahmeeinrichtung (5) eine Basis (7) aufweist, die integral mit der Zuführeinrichtung (3) ausgebildet oder daran angeschweißt oder angeklebt oder über mindestens eine Haltevorrichtung (12) mit ihr verbunden ist.

5. Verbindungseinrichtung (1) gemäß Anspruch 4, wobei mindestens ein Eisenkern im Inneren der Basis (7) der Aufnahmeeinrichtung (5) angeordnet ist.

6. Verbindungseinrichtung (1) gemäß einem der Ansprüche 1, 2, 4 oder 5, wobei mindestens ein Magnet im Inneren des Verbindungselements (2) angeordnet ist.

7. Verbindungseinrichtung (1) gemäß einem der vorhergehenden Ansprüche 1 bis 6, wobei mindestens ein Magnet als Dauermagnet ausgebildet ist.

8. Verbindungseinrichtung (1) gemäß einem der vorhergehenden Ansprüche, wobei das Verbindungselement (2) mit einer Antriebseinrichtung (4) verbunden ist.

9. Verbindungseinrichtung (1) gemäß einem der vorhergehenden Ansprüche, wobei die Abmessungen der Aufnahmeeinrichtung (5) und des Verbindungselements (2) so gewählt sind, dass in zusammengefügtem Zustand ein Luftspalt (L) dazwischen vorliegt.

10. Verbindungseinrichtung (1) gemäß einem der vorhergehenden Ansprüche, wobei das Verbindungselement (2) und/oder die Aufnahmeeinrichtung (5) aus Edelstahl mit nicht ferromagnetischen Eigenschaften, vorzugsweise aus austenitischem Stahl hergestellt ist/sind.

11. Waage, vorzugsweise Kombinationswaage mit Zuführeinrichtungen (3) welche durch Verbindungseinrichtungen (1) gemäß der Ansprüche 1 bis 10 mit Antriebselementen (4) lösbar verbunden sind.

12. Verfahren zum Herstellen und Lösen einer Verbindungseinrichtung gemäß einem der Ansprüche 1 - 11, wobei zur Herstellung der Verbindung das Verbindungselement (2) mit seiner oberen Seite in die Nähe der Aufnahmeeinrichtung (5) gebracht wird, so dass sich der erste Eisenkern (8) der Aufnahmeeinrichtung (5) und der erste Magnet (10) des Verbindungselements (2) sowie der zweite Eisenkern (9) der Aufnahmeeinrichtung (5) und der zweite Magnet (11) des Verbindungselements (2) gegenüberliegen und durch Magnetkraft angezogen werden, so dass das Verbindungselement (2) entlang des Vorsprungs (6) in die Aufnahmeeinrichtung (5) gezogen wird,
und wobei zum Lösen der Verbindung eine Kraft an einem Punkt H der Zuführeinrichtung (3) angelegt wird, der vom ersten Eisenkern (8) einen größeren Abstand als vom zweiten Eisenkern (9) besitzt, so dass sich durch die Hebelwirkung beim Lösen der beiden Teile der Abstand des ersten Eisenkerns (8) der Aufnahmeeinrichtung (5) vom ersten Magnet (10) des Verbindungselements (2) später ändert als der Abstand des zweiten Eisenkerns (9) der Aufnahmeeinrichtung (5) vom zweiten Magneten (11) des Verbindungselements (2).

## Claims

1. Connection device (1) for connecting a feeding device (3) with a driving device (4), the connection device having an upper side for feeding of products, and an opposite lower side (32b), the connection device (1) comprising:
a receiving device (5) on the lower side (3b) of the feeding device (3), wherein the receiving device (5) comprises at least one iron core, and, at the outer circumference, a protrusion (6); and
a connection element (2) with an upper side (2a), which comprises at least one magnet (10),
wherein the connection element (2) is designed basically complementary to the receiving device (5) and is adapted to be in mesh with the protrusion (6) of the receiving device (5), wherein iron core and magnet are aligned in a way that they face each other and generate a magnetic force in the state of being in mesh, which connects the receiving device (5) and the connection element (2) detachably, and wherein the connection element (2) and the receiving device (5) are designed in a way that they can be detached from each other by tilting around the rotation point (D').
wherein at least one of magnet and iron core is/are formed in a way that the magnetic force decreases with increasing distance from the rotation point (D'), wherein the connection element (2) and the receiving device (5) have respectively complementary conical shapes, which fit into each other during mounting and center themselves.

2. Connection device (1) for connecting a feeding device (3) with a driving device (4), the connection device having an upper side for feeding of products, and an opposite lower side (32b), the connection device (1) comprising:
a receiving device (5) on the lower side (3b) of the feeding device (3), wherein the receiving device (5) comprises a first iron core (8), a second iron core (9) and a protrusion (6); and
a connection element (2), which comprises a first magnet (10) and a second magnet (11) at its upper side (2a),
wherein the connection element (2) is basically designed complementary and is adapted to be in mesh with the protrusion (6) of the receiving device (5), wherein the iron cores (8, 9) and the magnets (10, 11) are aligned in a way that they face each other in a mounted state and connect the receiving device (5) and the connection element (2) detachably,
**characterized in that** the first magnet (10) has a larger distance from the center of gravity of the feeding device (3) compared to the second magnet (11), and the first magnet (10) has a higher magnetic force compared to the second magnet (11), so that the first magnet (10) can cause a larger holding force compared to the second magnet (11), wherein the connection element (2) and the receiving device (5) have respectively complementary conical shapes, which fit into each other during mounting and center themselves.

3. Connection device (1) according to claims 1 or 2, wherein the iron core(s) is/are provided in the connection element (2) instead of the receiving device (5), and the magnet(s) is/are provided in the receiving device (5) instead of the connection element (2).

4. Connection device (1) according to one of claims 1 tor 3, wherein the receiving device (5) comprises a basis (7) which is formed integrally with the feeding device (3) or is welded or glued thereto or is connected via at least one holding device (12) with it.

5. Connection device (1) according to claim 4, wherein at least one iron core is provided inside of the basis (7) of the receiving device (5).

6. Connection device (1) according to one of claims 1, 2, 4 or 5, wherein at least one magnet is provided inside the connection element (2).

7. Connection device (1) according to one of the previous claims 1 to 6, wherein at least one magnet is formed as a permanent magnet.

8. Connection device (1) according to one of the previous claims, wherein the connection element (2) is connected with a driving device (4).

9. Connection device (1) according to one of the previous claims, wherein the dimensions of the receiving device (5) and the connection element (2) are selected in a way that an air gap (L) is present therebetween in the connected state.

10. Connection device (1) according to one of the previous claims, wherein the connection element (2) and/or the receiving device (5) are made of stainless steel with non-ferromagnetic characteristics, preferentially austenitic steel.

11. Scale, preferentially combination scale with feeding devices (3), which are detachably connected via connection devices (1) according to one of the claims 1 to 10 with driving devices (4).

12. Process for establishing and detaching of a connection device according to one of claims 1-11,
wherein for establishing of the connection, the connection element (2) is brought in the vicinity of the receiving device (5) with its upper side, so that the first iron core (8) of the receiving device (5) and the first magnet (10) of the connection element (2) and the second iron core (9) of the receiving device (5) and the second magnet (11) of the connection element (2) face each other and are attracted by magnetic force, so that the connection element (2) is pulled along the protrusion (6) into the receiving device (5),
and wherein a force is applied to one point H of the feeding device (3) for detaching the connection, which has a larger distance from the first iron core (8) than from the second iron core (9), so that the distance of the first iron core (8) of the receiving device (5) from the first magnet (10) of the connection element (2) changes later than the distance of the second iron core (9) of the receiving device (5) from the second magnet (11) of the connection element (2) while detaching both parts, caused by the lever effect.

## Revendications

1. Dispositif de raccordement (1) pour le raccordement d'un dispositif d'amenée (3) à un dispositif d'entraînement (4), dans lequel le dispositif d'amenée (3) dispose d'une face supérieure pour l'amenée de produits et une face inférieure opposée (3b), dans lequel le dispositif de raccordement (1) présente :
un dispositif de réception (5) sur la face inférieure (3b) du dispositif d'amenée (3), dans lequel le dispositif de réception (5) présente au moins un noyau de fer (8) et sur la périphérie extérieure une saillie (6) ; et
un élément de raccordement (2) avec une face supérieure (2a), qui présente au moins un aimant (10),
dans lequel l'élément de raccordement (2) est configuré de manière sensiblement complémentaire au dispositif de réception (5) et est adapté pour être en prise avec la saillie (6) du dispositif de réception (5), dans lequel le noyau de fer (8) et l'aimant (10) sont agencés de sorte qu'ils sont opposés l'un à l'autre et génèrent une force magnétique à l'état en prise, qui raccordent l'un à l'autre de manière amovible le dispositif de réception (5) et l'élément de raccordement (2), et l'élément de raccordement (2) et le dispositif de réception (5) sont configurés de sorte qu'ils peuvent être détachés l'un de l'autre par basculement autour du point de rotation (D'),
dans lequel au moins un de l'aimant (10) et du noyau de fer (8) est formé de sorte que la force magnétique diminue à mesure que la distance du point de rotation (D') augmente,
dans lequel l'élément de raccordement (2) ainsi que le dispositif de réception (5) présentent des formes coniques respectivement complémentaires, qui s'adaptent l'un dans l'autre lors du montage et se centrent eux-mêmes.

2. Dispositif de raccordement (1) pour le raccordement d'un dispositif d'amenée (3) à un dispositif d'entraînement (4), dans lequel le dispositif d'amenée (3) dispose d'une face supérieure pour l'amenée de produits et d'une face inférieure opposée (3b), dans lequel le dispositif de raccordement (1) présente :
un dispositif de réception (5) sur la face inférieure (3b) du dispositif d'amenée, dans lequel le dispositif de réception (5) présente un premier noyau de fer (8), un deuxième noyau de fer (9) et une saillie (6) ; et
un élément de raccordement (2), qui présente sur sa face supérieure (2a) un premier aimant (10) et un deuxième aimant (11),
dans lequel l'élément de raccordement (2) est configuré de manière sensiblement complémentaire et est adapté pour être en prise avec la saillie (6) du dispositif de réception (5), dans lequel les noyaux de fer (8, 9) et les aimants (10, 11) sont agencés de sorte qu'ils sont opposés l'un à l'autre à l'état monté et qui raccordent l'un à l'autre de manière amovible le dispositif de réception (5) et l'élément de raccordement (2), **caractérisé en ce que** le premier aimant (10) dispose d'une plus grande distance du centre de gravité du dispositif d'amenée (3) que le deuxième aimant (11) et le premier aimant (10) présente une plus grande force magnétique que le deuxième aimant (11), de sorte que le premier aimant (10) peut provoquer une plus grande force de retenue que le deuxième aimant (11),
dans lequel l'élément de raccordement (2) ainsi que le dispositif de réception (5) présentent des formes coniques respectivement complémentaires, qui s'adaptent l'un dans l'autre lors du montage et se centrent eux-mêmes.

3. Dispositif de raccordement (1) selon la revendication 1 ou 2, dans lequel le/les noyau(x) de fer sont prévus dans l'élément de raccordement (2) en lieu et place du dispositif de réception (5), et le/les aimant(s) est/sont prévu(s) dans le dispositif de réception (5) en lieu et place de l'élément de raccordement (2).

4. Dispositif de raccordement (1) selon l'une quelconque des revendications 1 à 3, dans lequel le dispositif de réception (5) présente une base (7), qui est réalisée d'un seul tenant avec le dispositif d'amenée (3) ou y est soudée ou collée ou raccordée à celui-ci par le biais d'au moins un dispositif de retenue (12).

5. Dispositif de raccordement (1) selon la revendication 4, dans lequel au moins un noyau de fer est agencé à l'intérieur de la base (7) du dispositif de réception (5) .

6. Dispositif de raccordement (1) selon l'une quelconque des revendications 1, 2, 4 ou 5, dans lequel au moins un aimant est agencé à l'intérieur de l'élément de raccordement (2).

7. Dispositif de raccordement (1) selon l'une quelconque des revendications 1 à 6, dans lequel au moins un aimant est réalisé en tant qu'aimant permanent.

8. Dispositif de raccordement (1) selon l'une quelconque des revendications précédentes, dans lequel l'élément de raccordement (2) est raccordé à un dispositif d'entraînement (4).

9. Dispositif de raccordement (1) selon l'une quelconque des revendications précédentes, dans lequel les dimensions du dispositif de réception (5) et de l'élément de raccordement (2) sont sélectionnées de sorte qu'à l'état assemblé, il y a un entrefer (L) entre eux.

10. Dispositif de raccordement (1) selon l'une quelconque des revendications précédentes, dans lequel l'élément de raccordement (2) et/ou le dispositif de réception (5) est/sont fabriqué(s) en acier inoxydable avec des propriétés non ferromagnétiques, de préférence en acier austénitique.

11. Balance, de préférence balance combinatoire avec des dispositifs d'amenée (3) qui peuvent être raccordés de manière amovible à des éléments d'entraînement (4) par des dispositifs de raccordement (1) selon les revendications 1 à 10.

12. Procédé de fabrication et de détachement d'un dispositif de raccordement selon l'une quelconque des revendications 1 - 11,
dans lequel pour la réalisation du raccordement, l'élément de raccordement (2) est amené avec sa face supérieure à proximité du dispositif de réception (5), de sorte que le premier noyau de fer (8) du dispositif de réception (5) et le premier aimant (10) de l'élément de raccordement (2) ainsi que le deuxième noyau de fer (9) du dispositif de réception (5) et le deuxième aimant (11) de l'élément de raccordement (2) sont opposés et attirés par force magnétique, de sorte que l'élément de raccordement (2) est tiré le long de la saillie (6) dans le dispositif de réception (5),
et dans lequel pour le détachement du raccordement, une force est appliquée à un point H du dispositif d'amenée (3), qui a une plus grande distance du premier noyau de fer (8) que du deuxième noyau de fer (9), de sorte que par effet de levier lors du détachement des deux éléments, la distance du premier noyau de fer (8) du dispositif de réception (5) par rapport au premier aimant (10) de l'élément de raccordement (2) change plus tard que la distance du deuxième noyau de fer (9) du dispositif de réception (5) par rapport au deuxième aimant (11) de l'élément de raccordement (2).
